Europäisches Patentamt

European Patent Office

Office européen des brevets

(19)

(11) Publication number: **0 416 509 A2**

## EUROPEAN PATENT APPLICATION

(12)

(21) Application number: 90116897.1

(22) Date of filing: 03.09.90

(51) Int. Cl.5: **G05B 19/05**

(30) Priority: 04.09.89 JP 228982/89
04.09.89 JP 228986/89
08.09.89 JP 234408/89

(43) Date of publication of application:
**13.03.91 Bulletin 91/11**

(84) Designated Contracting States:
**AT BE CH DE DK ES FR GB GR IT LI NL SE**

(71) Applicant: **OMRON CORPORATION**
**10, Tsuchido-cho Hanazono Ukyo-ku**
**Kyoto 616(JP)**

(72) Inventor: **Mitsuda, Hayao, c/o Omron**
**Corporation**

Intel. Prop. Center, 20, Igadera, Shimokaiinji
Nagaokakyo-shi, Kyoto 617(JP)
Inventor: **Inoue, Tadashi, c/o Omron**
**Corporation**
Intel. Prop. Center, 20, Igadera, Shimokaiinji
Nagaokakyo-shi, Kyoto 617(JP)
Inventor: **Fukui, Shinji, c/o Omron Corporation**
Intel. Prop. Center, 20, Igadera, Shimokaiinji
Nagaokakyo-shi, Kyoto 617(JP)

(74) Representative: **WILHELMS, KILIAN &**
**PARTNER Patentanwälte**
**Eduard-Schmid-Strasse 2**
**W-8000 München 90(DE)**

(54) **Programmable controller, and method and apparatus for programming same.**

(57) A programming method for a programmable
controller includes steps of extracting a comment
that has been written between lines of a created
program, assigning the extracted comment to an
input contact, creating a pseudo-program statement
corresponding to the input contact, and correlating
and storing, in a comment file, the number of the
input contact, to which the comment has been assigned in the creation of the pseudo-program, and
the comment.

Fig.5

EP 0 416 509 A2

Xerox Copy Centre

# PROGRAMMABLE CONTROLLER, AND METHOD AND APPARATUS FOR PROGRAMMING SAME

## BACKGROUND OF THE INVENTION

Field of the Invention:

This invention relates to a programmable controller, and to a method and apparatus for programming the programmable controller.

A programmable controller is a control apparatus having an internal program and containing a central processing unit (CPU) for executing sequence control equivalent to that of a sequence control apparatus made up of relays, timers and the like.

Description of the Related Art:

Programs incorporated in a programmable controller include a system program for controlling the basic operation of the programmable controller, and a user program for performing sequence control of an apparatus. In general, the user program is created by a user utilizing the programmable controller. In order to create a user program, a program development aiding apparatus (also referred to as a programming apparatus) is used. Also available is a programmable controller having a programming function. Apparatus which aid in program development basically are of two types, namely one which has a special-purpose construction (architecture and program) for program creation, and one which possesses an ordinary general-purpose computer (a small-size computer referred to as a personal computer) programmed for application to program development. In either case, the user program created by the development aiding apparatus is transferred to the programmable controller to which it is connected, and the user program is stored in a user program memory within the programmable controller.

In recent years, much progress has been made in raising the speed and enlarging the capacity of programmable controllers, and the user programs inputted to such programmable controllers are required to be more complicated and of greater length.

Since comprehending the contents of a user program becomes more difficult the longer and more complicated the program, there are instances in which comments are inserted into the user program to make it easier to understand, as in the manner of other computer programs, and to give the user program value as a document.

In a case where comments are inserted into the user program of a programmable controller, it is possible to utilize these comments effectively while the user program is present within the apparatus for aiding program development. However, the codes which represent these comments are not originally required as far as the programmable controller is concerned. When it is attempted to leave also the codes representing the comments in the user program memory effectively along with the user program created by the development aiding apparatus and transferred to the programmable controller, the storage capacity of the user program memory must be enlarged considerably. This is difficult to achieve in terms of cost.

In an effort to solve this problem, an arrangement could be conceived in which, when the user program created by the development aiding apparatus is transferred to the programmable controller, the comments are left behind in the aiding apparatus and only the user program is transferred to the programmable controller. In such an arrangement, when the user program is debugged by the programmable controller and transferred back to the development aiding apparatus, the comments that were left behind are reunited with the user program. However, when an insertion or deletion is made in the user program at the programmable controller, the positions at which the comments are to be restored change and a complete restoration of the comments can no longer be achieved.

A programmable controller has an input/output memory in which data to be inputted to the programmable controller and data to be outputted from the programmable controller are stored. These data generally represent the states (on or off) of relay contacts or output terminals, in which case each item of data is composed of one bit. Numbers which specify this one-bit data are referred to as relay numbers, contact numbers, etc. A plurality (in general, 16) of items of one-bit data are grouped together to form a channel. A number specifying a channel is referred to as a channel number. In this specification, numbers inclusive of relay numbers, contact numbers and channel numbers shall be referred to as input/output (I/O) numbers.

Basically, there are two methods used to designate an I/O number in a user program in the conventional programmable controller. One method employs relay identifications and numbers decided beforehand by the manufacturer, and the other uses character strings, which are referred to as labels or symbols, having one-to-one correspondence with the I/O numbers.

In case of a holding relay, for example, the former method uses HR as the relay identification and assigns a number (e.g., 0000) to this identification, giving HR0000. In case of a link relay, the relay number would be LR0001, by way of example.

With the latter method, the character string ABCDE, for example, is used with respect to HR0000 mentioned above, and the character string ABCDD is used with respect to LR0001.

In the former case, however, the relay numbers designating the I/O's are themselves already fixed, and the user cannot redefine them using desired numbers for convenience of use. When the user program is expressed in written form, it is difficult to read.

In the latter case, the user can define the I/O relay numbers as desired label names, and therefore the user program in written form is easy to read. However, when the number of I/O's which are the object of control is large, the storage capacity of the memory storing the labels must be enlarged. This results in a more costly programmable controller.

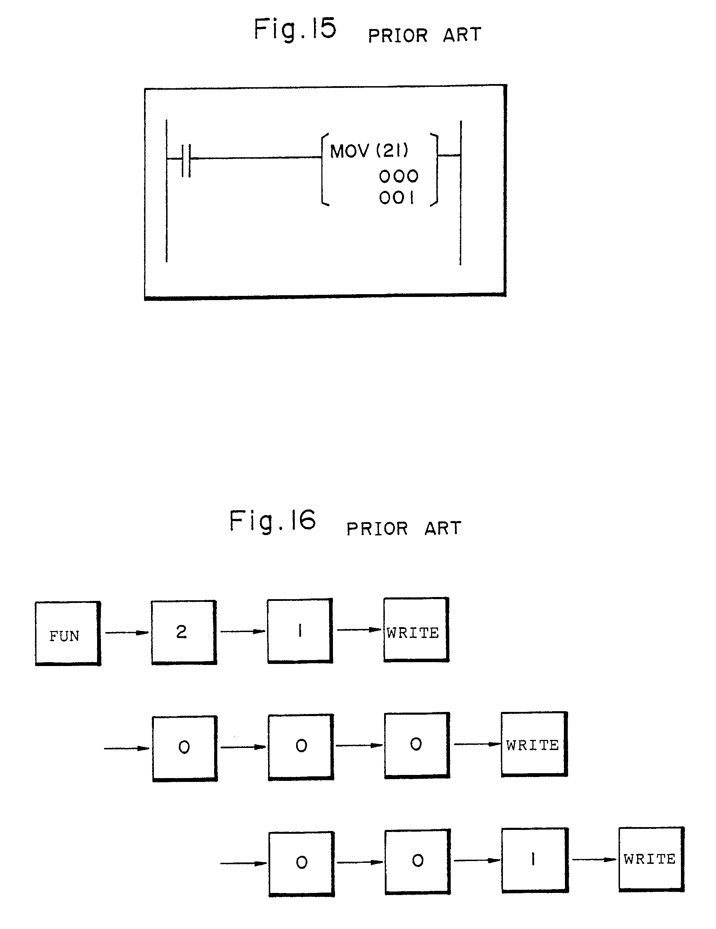

When a user program is created in the conventional programmable controller, numbers representing various instructions are decided by the maker in order to reduce the number of input keys. (These numbers are referred to as maker-defined instruction numbers.) For example, when a instruction MOV 000 001 is entered, as shown in Fig. 15, a instruction key FUN (Fig. 16) is pressed, a maker-defined instruction number 21 assigned to the instruction MOV is entered, and a write key is pressed. Furthermore, a number 000 is entered, the write key is pressed, a number 001 is entered, and the write key is pressed. When this is done, the entered instruction is displayed in the form of a ladder diagram on a display unit, as illustrated in Fig. 15.

The above-mentioned instruction is for transferring the data in an area at address 000 in the input/output memory to an area at address 001.

Though the aforementioned conventional method is advantageous in that a small number of input keys is sufficient, a problem encountered is that the user must remember the maker-defined instruction numbers corresponding to all types of the original instructions set beforehand on the maker side.

Furthermore, several hundred types of instructions are used in programmable controllers at the present time. In cases where several controllers manufactured by different makers are used in combination, it is extremely difficult for the user to remember all of the maker-defined instruction numbers having different specifications decided in advance by the makers. Such a system is inconvenient to use.

## SUMMARY OF THE INVENTION

An object of the present invention is to provide a development aiding apparatus for a programmable controller, as well as a programming method, in which a user program created with inserted comments in a development aiding apparatus is capable of being transferred to a programmable controller without subjecting the memory of the programmable controller to an excessive burden, and in which the comments can be completely restored in a case where the program is modified by the programmable controller and transferred back to the aiding apparatus.

Another object of the present invention is to make a user program in written form easier to read, without a particular increase in memory capacity, by making it possible for a user to employ I/O numbers upon redefining them as desired.

A further object of the present invention is to make it possible for maker-defined instruction numbers designated on the maker side to be freely modified on the user side, thereby enabling instruction numbers conforming to the user's purposes to be defined (these defined numbers being referred to as user-defined instruction numbers) so that the apparatus can be made more user friendly.

According to the present invention, a program development aiding apparatus for a programmable controller according to the present invention comprises comment/pseudo-program conversion means for extracting a comment that has been written between lines of a created user program, assigning the extracted comment to an input contact, and creating a pseudo-program statement corresponding to the input contact, and comment file means for correlating and storing a number of the input contact, to which the comment has been assigned in the comment/pseudo-program conversion, and the comment.

The development aiding apparatus further includes means for transferring a created user program, which includes a pseudo-program statement, to a programmable controller.

The development aiding apparatus further includes reverse-converting means for converting a pseudo-program statement in a user program, which includes the pseudo-program statement, back into a corresponding comment by referring to the comment file means.

The development aiding apparatus further includes means for displaying a user program wherein the comment, back to which the pseudo-program statement has been converted, is included between lines.

The comment/pseudo-program conversion means preferably creates a pseudo-program upon setting an output terminal with respect to the input terminal, the output terminal being representative of the pseudo-program.

In this case, the reverse-conversion means extracts a pseudo-program statement based on a number of an output terminal representative of a pseudo-program in the user program which includes the pseudo-program statement, and converts the extracted pseudo-program statement back into a corresponding comment by referring to the comment file means.

A pseudo-program created by converting a comment involves a much smaller number of bits than a code expressing the comment as characters. Accordingly, by converting a comment into a pseudo-program, an, excessive burden is not placed upon the memory of the programmable controller that is for storing the user program which includes the pseudo-program. In other words, the user program memory need not have a large storage capacity. In addition, in a case where such a user program is transferred from the programmable controller to the development aiding apparatus, the latter is capable of completely restoring a comment contained in the form of a pseudo-program in the user program.

A programming method according to the present invention is for creating a user program of a programmable controller equipped with an input/output memory having an input/output area, which possesses absolute addresses, for storing input/output data of a control element such as a relay contact at a storage location designated by the absolute address, the method comprising the steps of partitioning the input/output area of the input/output memory into a plurality of areas, creating a conversion table for correlating and storing an identification of each partitioned area and absolute addresses data specifying the partitioned area, designating a control element of the input/output area by entering the identification of the partitioned area and a relative address in this partitioned area, and converting the designated control element into the absolute address thereof by referring to the conversion table.

A programming apparatus according to the present invention is for creating a user program of a programmable controller equipped with an input/output memory having an input/output area, which possesses absolute addresses, for storing input/output data of a control element such as a relay contact at a storage location designated by the absolute address, the apparatus comprising means for creating a conversion table for correlating and storing identifications of partitioned areas, which are obtained when the input/output area of the input/output memory is partitioned into a plurality of areas, and absolute address data specifying these partitioned areas, and means which, when a control element of an input/output area is designated by entering the identification of the partitioned area and a relative address in this partitioned area, is for converting the designated control element into the absolute address thereof by referring to the conversion table.

The programming apparatus further comprises means for transferring the created conversion table to a programmable controller.

A programmable controller according to the present invention comprises an input/output memory having an input/output area, which possesses absolute addresses, for storing input/output data of a control element such as a relay contact at a storage location designated by the absolute address, and a conversion table for correlating and storing identifications of partitioned areas, which are obtained when the input/output area of the input/output memory is partitioned into a plurality of areas, and absolute address data specifying these partitioned areas.

Further, a programmable controller according to the present invention comprises an input/output memory having an input/output area, which possesses absolute addresses, for storing input/output data of a control element such as a relay contact at a storage location designated by the absolute address, means for creating a conversion table for correlating and storing identifications of partitioned areas, which are obtained when the input/output area of the input/output memory is partitioned into a plurality of areas, and absolute address data specifying these partitioned areas, and means which, when a control element of an input/output area is designated by entering the identification of a partitioned area and a relative address of this partitioned area, is for converting the designated control element into the absolute address thereof by referring to the conversion table.

The programmable controller further comprises means for storing the created conversion table.

In accordance with the present invention, an increase in the memory capacity of the conversion table storing the redefinition information is less than in the conventional case where character strings such as labels are used for redefinition. Even if there are a large number of I/O's (a large number of control elements), the increase in cost therefor is very small.

With regard also to a user program created by another programming apparatus, it is possible to make joint use of the program by establishing correspondence between this user program and the redefinition information in the conversion table provided in the programmable controller. This enhances the universality of the user program.

When the same user program is created by a plurality of individuals, it is possible to assign the individuals the areas and identifications of the relays (control elements) used, thereby facilitating the management of the I/O areas and enhancing the efficiency of such operations as user program creation and debugging.

A programmable controller according to the present invention comprises a user program memory for storing a user program described using maker-defined instruction numbers, an instruction number conversion table for mutually correlating and storing the maker-defined instruction numbers and corresponding user-defined instruction numbers, and means which, when a user-defined instruction number is entered, is for converting this entered user-defined instruction number into a maker-defined instruction number upon referring to the instruction number conversion table.

The programmable controller further comprises means for performing control in such a manner that a user program created by the instruction number conversion executed by the converting means is stored in the user program memory.

The programmable controller further comprises means for entering a user program statement using user-defined instruction number.

The programmable controller further comprises input means for entering user-defined instruction numbers corresponding to maker-defined instruction numbers in order to create the instruction number conversion table.

The programmable controller further comprises means for reading a user program out of the user program memory and converting a maker-defined instruction number, contained in the read user program, into a user-defined instruction number upon referring to the instruction number conversion table, and means for displaying the user program containing the converted user-defined instruction number.

A programmable controller according to the present invention comprises a user program memory for storing a user program described using maker-defined instruction numbers, and an instruction number conversion table for mutually correlating and storing the maker-defined instruction numbers and corresponding user-defined instruction numbers.

The programmable controller further comprises input means for entering user-defined instruction numbers corresponding to maker-defined instruction numbers in order to create the instruction number conversion table.

The programmable controller further comprises means for reading a user program out of the user program memory and converting the maker-define instruction number contained in the read user program into a user-defined instruction number upon referring to the instruction number conversion table, and means for displaying the user program containing the converted user-defined instruction number.

A programming method according to the present invention comprises the steps of creating, in advance, an instruction number conversion table for mutually correlating and storing maker-defined instruction numbers and corresponding user-defined instruction numbers, entering a user program statement using a user-defined instruction number, and converting an entered user-defined instruction number into a maker-defined instruction number upon referring to the instruction number conversion table.

The programming method further includes a step of transferring a user program created by the instruction number conversion to a programmable controller or storing this user program in a user program memory.

The programming method further includes a step of converting a maker-defined instruction number in a user program containing this maker-defined instruction number, transferred from a programmable contraller or read out of a user program memory, into a user-defined instruction number upon referring to the instruction conversion table, and displaying the user program containing the converted user-defined instruction number.

A programming apparatus according to the present invention comprises a conversion table for mutually correlating and storing maker-defined instruction numbers and corresponding user-defined instruction numbers, means for entering a user program statement using a user-defined instruction number, and means for converting an entered user-defined instruction number into a maker-defined instruction number upon referring to the instruction number conversion table.

The programming apparatus further comprises means for performing control in such a manner that a user program created by the instruction number conversion is transferred to a programmable controller or stored in a user program memory.

The programming apparatus further comprises means for converting a maker-defined instruction number in a user program containing the maker-defined instruction number, transferred from a programmable controller or read out of a user program memory, into a user-defined instruction number upon referring to the instruction conversion table, and means for displaying the user program containing the converted user-defined instruction number.

The programming apparatus further comprises input means for entering user-defined instruction numbers corresponding to maker-defined instruction numbers in order to create the instruction number conversion table.

In accordance with the present invention, as should be evident from the construction set forth above, an instruction number table can be created merely by entering user-defined instruction numbers on the user side. If a user-defined instruction number is entered in program creation, this will be converted into a maker-defined instruction number and then stored in memory, and the instruction number defined by the user can by verified by display means. Furthermore, the user-defined instruction number is displayed also when the created user program is read out and displayed. As a result, the user need not take the trouble to memorize the original instruction numbers designated by different makers. This makes the apparatus more user friendly.

If user-defined instruction numbers often employed by the user are set to prescribed instruction numbers, then these user-defined instruction numbers can be applied also to the programmable controllers of various makers. Consequently, these instruction numbers will be easy to remember. Furthermore, even if the model of the programmable controller is different, it will suffice merely to redefine user-defined instruction numbers already defined. As a result, user definitions can readily be set and the apparatus is made much easier to use.

Other features and advantages of the present invention will be apparent from the following description taken in conjunction with the accompanying drawings, in which like reference characters designate the same or similar parts throughout the figures

## BRIEF DESCRIPTION OF THE DRAWINGS

Figs. 1 through 6 illustrate a first embodiment of the present invention, in which:

Fig. 1 is a block diagram showing the general construction of a programmable controller and an apparatus for aiding in the development of a user program for the programmable controller;

Fig. 2 is a ladder diagram showing an example of a user program created by the development aiding apparatus;

Fig. 3 is a ladder diagram showing an example of a user program after comments have been converted into pseudo-programs;

Fig. 4 is an explanatory view showing an example of a comment file;

Fig. 5 is a flowchart showing a processing procedure for converting comments in a user program into pseudo-programs; and

Fig. 6 is a flowchart showing a processing procedure for displaying a user program, which contains pseudo-programs, on a display unit upon converting the pseudo-programs into comments;

Figs. 7 through 10 illustrate a second embodiment of the present invention, in which:

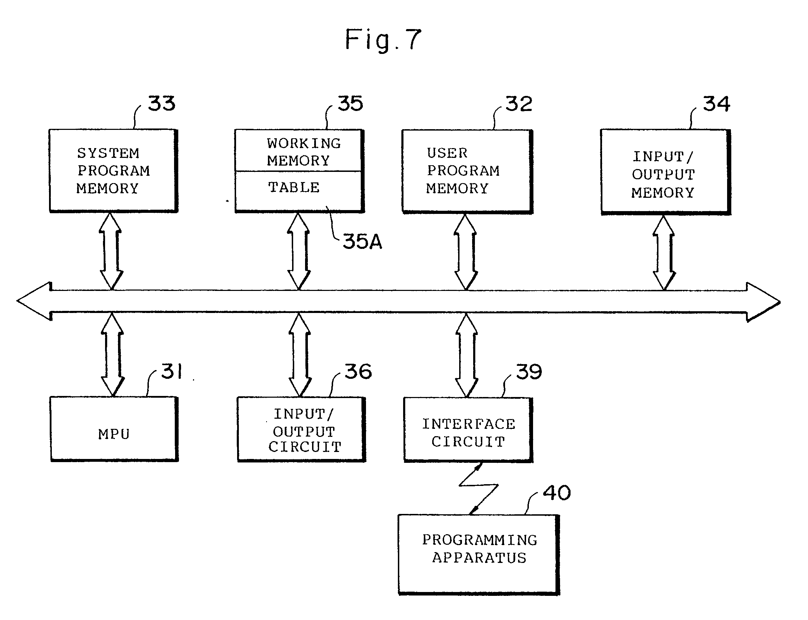

Fig. 7 is a block diagram showing the general construction of a programmable controller;

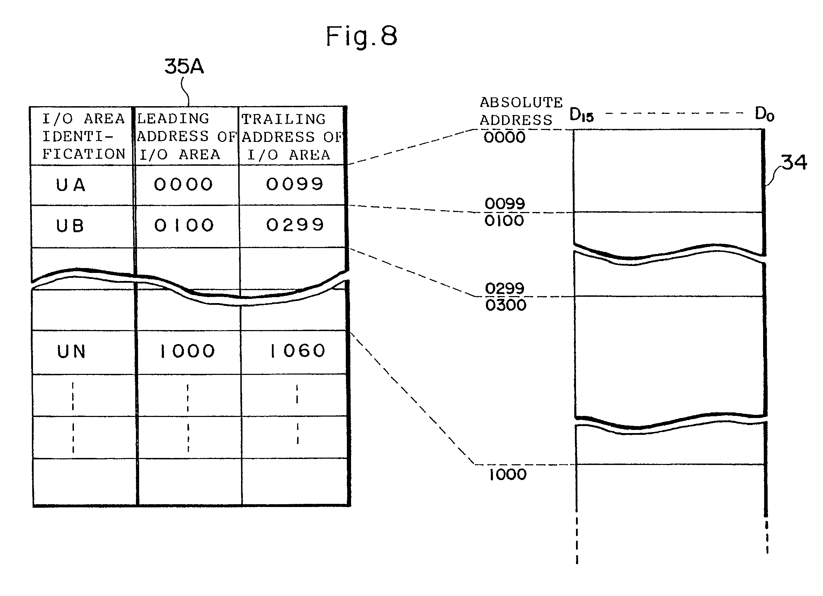

Fig. 8 illustrates an I/O number conversion table, I/O areas of an input/output memory corresponding thereto, and the relationship between them;

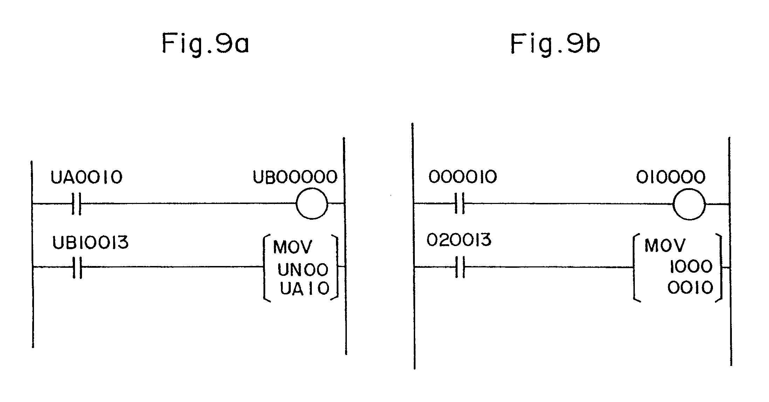

Figs. 9a and 9b are ladder diagrams showing specific examples of user programs; and

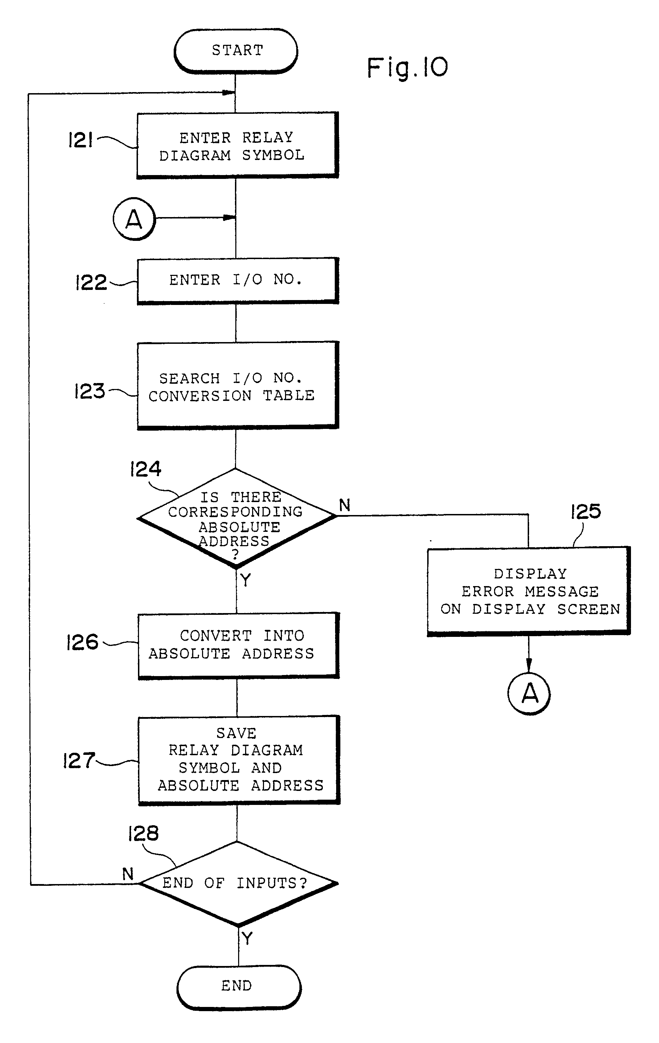

Fig. 10 is a flowchart showing a processing procedure for creating a user program;

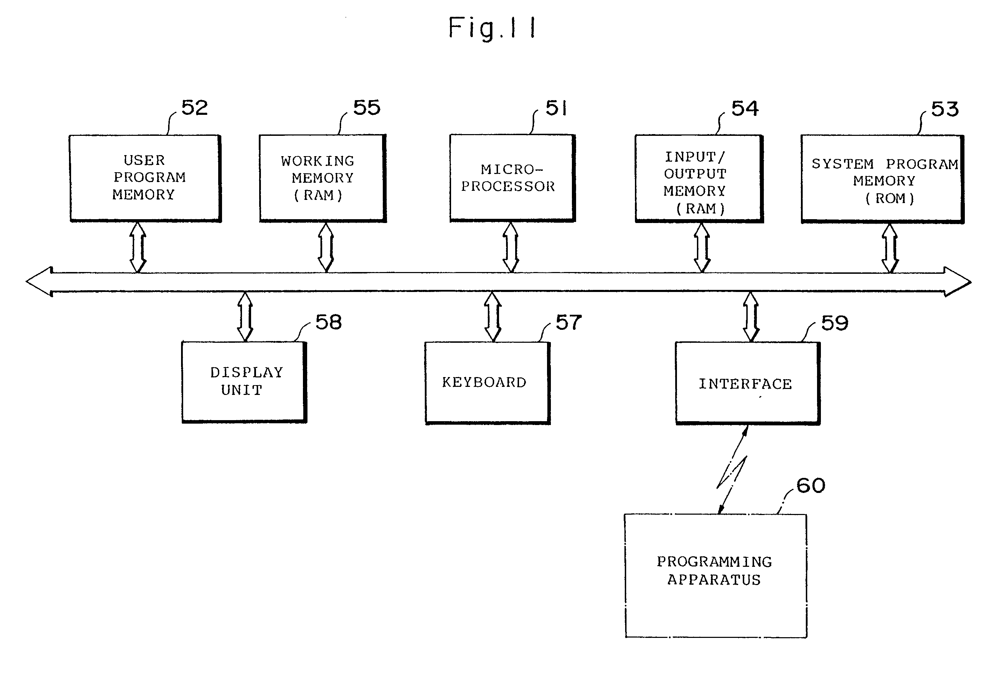

Figs. 11 through 14 illustrate a third embodiment of the present invention, in which:

Fig. 11 is a block diagram showing the construction of a programmable controller;

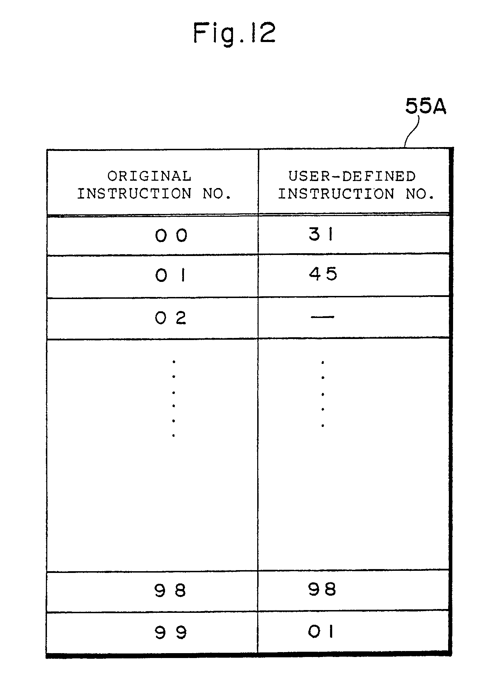

Fig. 12 shows an instruction number conversion table;

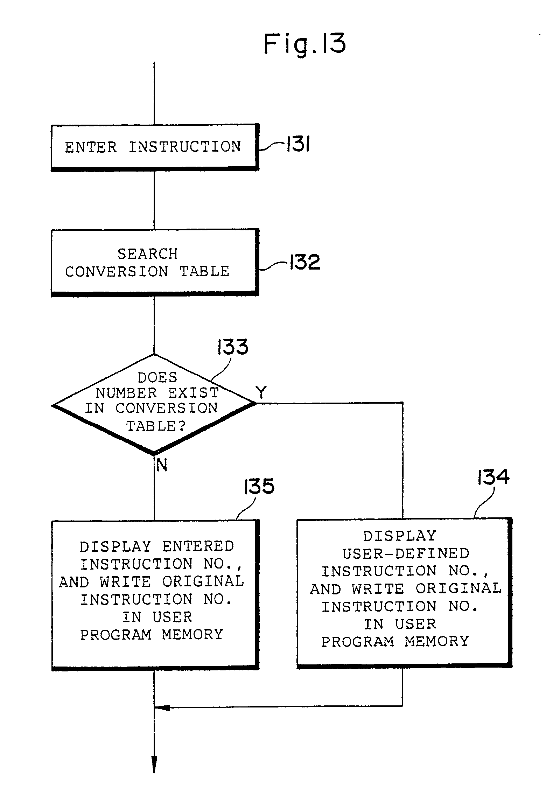

Fig. 13 is a flowchart showing a processing procedure for creating a user program;

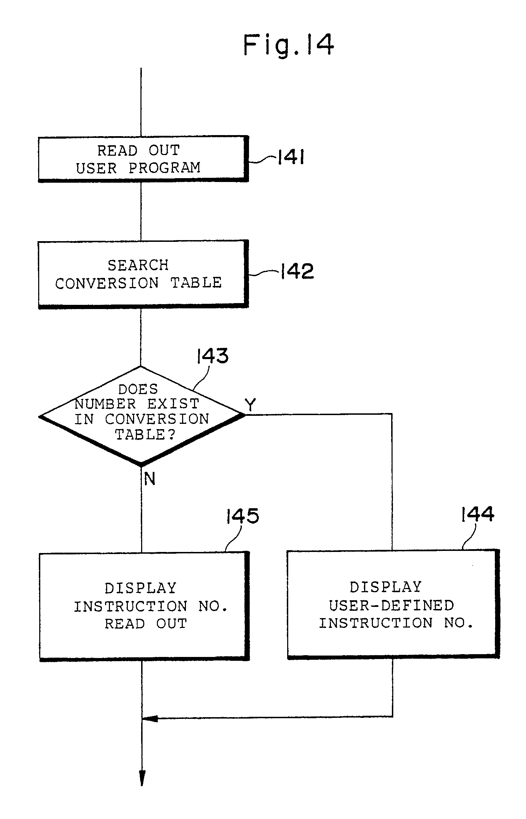

Fig. 14 is a flowchart showing a processing procedure for displaying a user program;

Fig. 15 illustrates an example of a user program display; and

Fig. 16 illustrates an operation for inputting a program statement.

## DESCRIPTION OF THE PREFERRED EMBODIMENTS

A first embodiment of the invention will now be described.

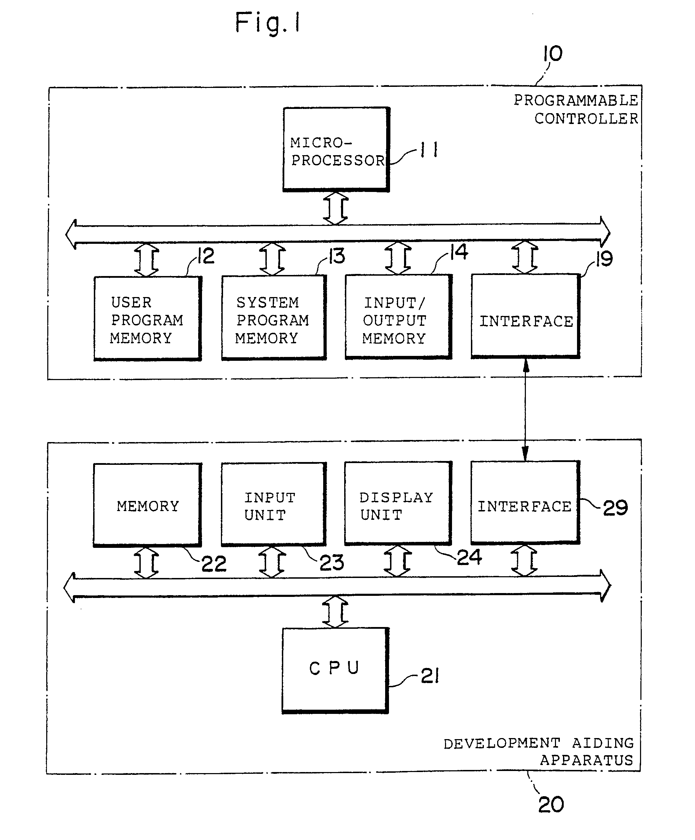

Fig. 1 illustrates the general construction of a programmable controller and an apparatus for aiding in the development of a user program for the programmable controller.

The programmable controller, shown at numeral 10, has a microprocessor 11, a user program memory 12, a system program memory 13, an input/output memory 14, and an interface circuit 19. The development aiding apparatus, indicated at numeral 20, includes a CPU 21, a memory 22 for storing a program executed by the CPU 21, a created user program and other data, an input unit 23 which includes a keyboard or the like, a display unit 24 implemented by a CRT display device or the like, and an interface circuit 29. The programmable controller 10 and development aiding apparatus are interconnected via the interface circuits 19, 29. The controller 10 and the apparatus 20 can be left connected while a user program is being developed, or the controller 10 and apparatus 20 can be connected only when a user program created by the apparatus 20 is transferred to the controller 10 or only when a user program is returned from the controller 10 to the aiding apparatus 20.

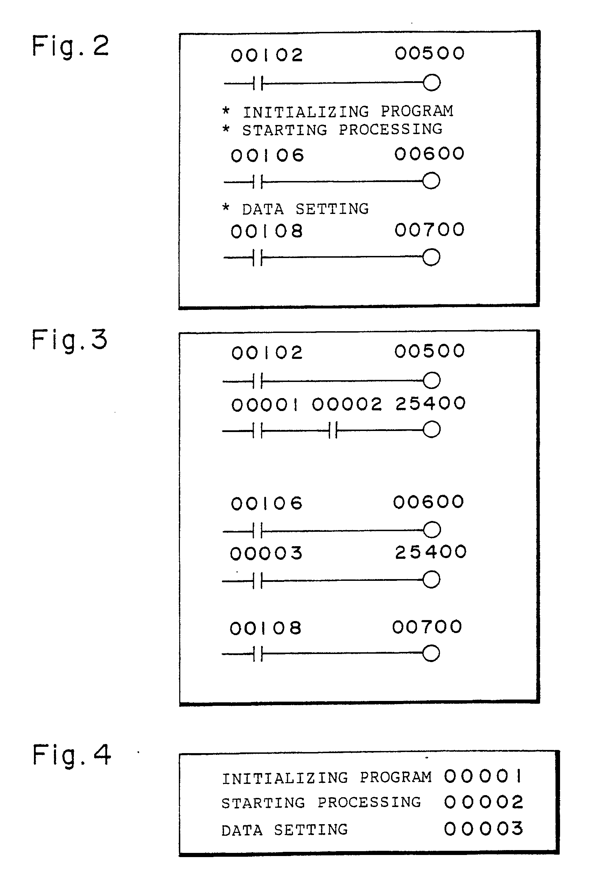

Fig. 2 is a ladder diagram showing an example of a user program created using the development aiding apparatus 20.

In Fig. 2, symbols representing input contacts and output terminals are successively programmed in combination with numbers assigned to these contacts and terminals, as is well known in the art. Comments that are convenient in terms of creating or decoding a user program are inserted between the user program lines. In Fig. 2, "* INITIALIZING PROGRAM", "* STARTING PROCESSING" and "* DATA SETTING" are written in.

A user program of this kind is created by entering various symbols and their numbers from the input unit 23 of the development aiding apparatus 20. The comments also are entered from the input unit 23. The entered items and the created user program are displayed on the screen of the display unit 24 one or several lines at a time whenever entered or created. This makes it possible confirm inputs.

A comment inserted between lines of a user program is converted into a program statement in pseudo-fashion. Fig. 3 illustrates the manner in which comments in the user program of Fig. 2 are converted into program statements. For example, the comment "* INITIALIZING PROGRAM" is replaced by an input contact of No. 00001, and the comment "* STARTING PROCESSING" is replaced by an input contact of No. 00002. An output terminal of No. 25400 is set for these input contacts.

Similarly, the comment "*DATA SETTING" is replaced by an input contact of No. 00003, and the output terminal of No. 25400, which is the same as that above, is set for this input contact.

Thus, comments written in the user program are converted into input contacts in order. If the number of an internal auxiliary relay not used in an ordinary user program is employed as the number 25400 used as the output terminal, and if an identification as to whether or not there is a comment is made using this output terminal number, then even if the input contact numbers 00001 through 00003 are used in another portion of the user program, this will have no relation to the user program execution or logic.

When inserted comments are thus converted into program statements (one-line programs) in pseudo-fashion, after which the program statements are transferred to the programmable controller 10, only the original user program minus the comment statements can be executed in the programmable controller 10, thereby making it possible to perform debugging.

Fig. 4 illustrates a comment file in which the numbers of input contacts used when comments are converted into program statements are stored in correspondence with codes representing the comments. This file is stored in the memory 22 within the development aiding apparatus 20.

Reference is had to this comment file also when the user program is transferred from the controller 10 to the development aiding apparatus 20 following debugging in the programmable controller 10. In this way the pseudo-program statements are converted back (reverse-converted) into the corresponding comments. The user program containing these comments between its lines is then displayed on the display unit 24.

It is possible to arrange it so that a conversion from comment to program statement is performed whenever a comment is entered, or so that the conversions are performed en masse once the entire user program has been completed.

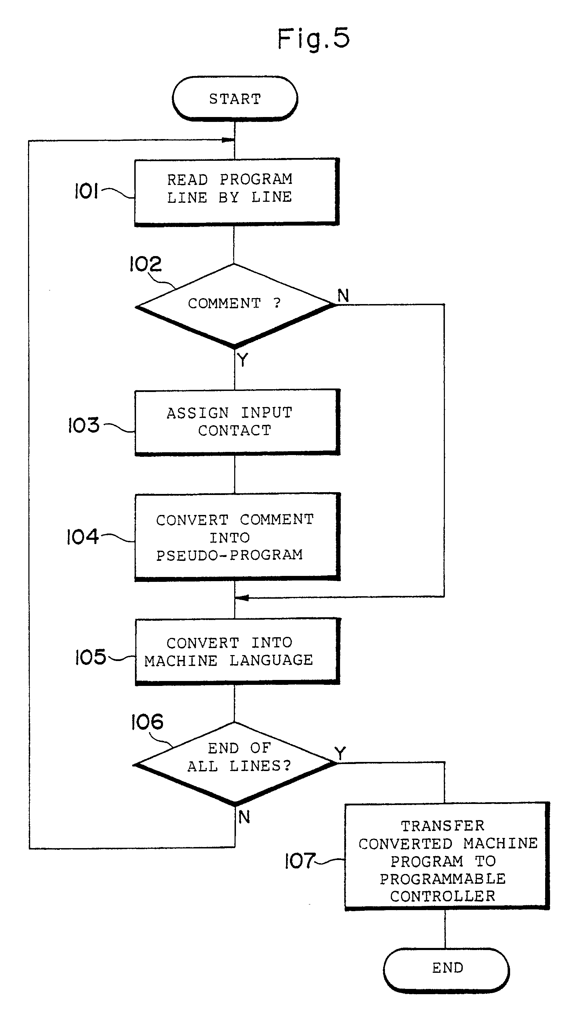

Fig. 5 is a flowchart showing a processing procedure for converting comments contained in a user program into pseudo-programs after the user program has been completed. This processing is executed by the CPU 21 in the development aiding apparatus 20.

The created user program containing comments is stored in the memory 22. The program (or its comments) is read out line by line (step 101), and it is determined whether the read data is an instruction word (program) or comment.

If the read data is a comment, the number of an input contact is assigned to the comment, and the code of the comment and the input contact number assigned thereto are stored in the comment file so as to correspond to each other (step 103). The comment is converted into a pseudo-program using the assigned input contact number and a predetermined output terminal number (step 104). Here the output terminal number used in the pseudo-program is one not employed in the user program. It is possible to arrange it so that the output terminal number is decided by the user. By adopting such an expedient, the pseudo-programs and the original user program will not be confused with each other.

The pseudo-program resulting from the conversion and the program determined to be an instruction word at step 102 are converted into the machine language of the programmable controller (step 105).

The foregoing processing is executed repeatedly in order line by line with regard to the entire program created and stored in the memory 22. When this processing is completed for the entire program (step 106), the user program (inclusive of the pseudo-programs) converted into machine language is transferred to the programmable controller 10, where it is stored in the user program memory 12 (step 107).

Processing for debugging the user program transferred and stored in the memory 12 is executed in the programmable controller 10, and the debugged user program is then transferred to the development aiding apparatus 20. The latter displays the debugged user program on the display unit 24.

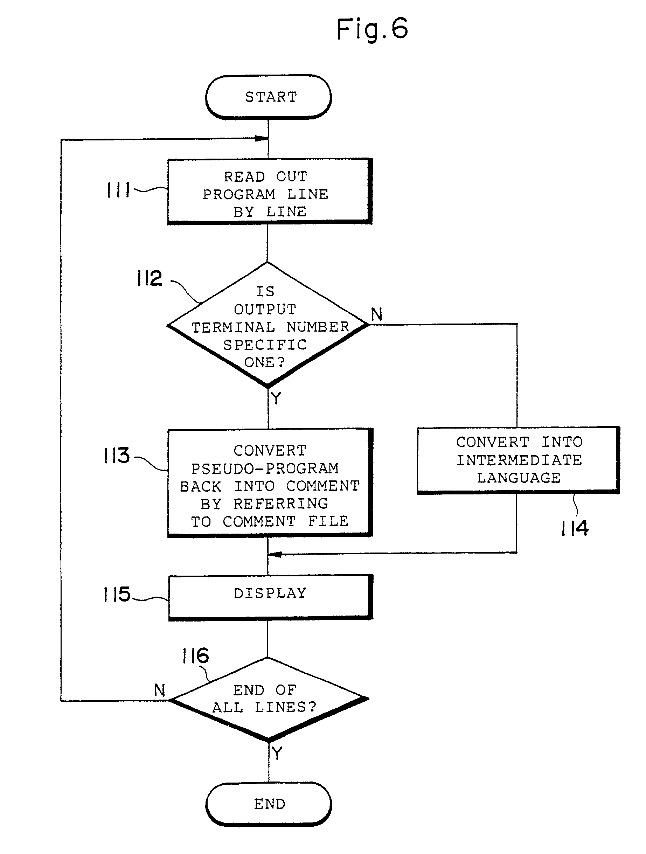

Fig. 6 is a flowchart illustrating the display processing procedure executed by the development aiding apparatus 20.

When the user program (inclusive of the pseudo-programs) in machine language has been transferred from the programmable controller 10, the program is stored temporarily in the memory 22 of the developmept aiding apparatus 20. The user program stored in the memory 22 is successively read out line by line starting from the beginning thereof (step 111). It is determined (step 112) whether the output terminal number contained in a read program statement is a specific one (No. 25400 shown in Fig. 3) used in a pseudo-program (i.e., used in the conversion processing of step 104 in Fig. 5)

If the output terminal number is a specific output terminal number, then it is determined that the read program is a pseudo-program, the comment file is referred to based on the input contact numbers contained in the program, and the pseudo-program is converted back into the corresponding comment (step 113). This is displayed on the display screen of the display unit 24 (step 115).

If the output terminal number is not a specific output terminal number, then this means that the read program is an ordinary program statement. Therefore, the program statement is converted into an intermediate language used by the development aiding apparatus 20 (step 114) and this is displayed on the display screen (step 115).

The display of the program or comment on the display screen of the display unit 24 may be presented line by line or several lines at a time.

The foregoing processing is performed repeatedly every line of the user program. When the display processing is completed for all lines, the processing procedure of Fig. 6 is terminated (step 116).

Thus, the user program in machine language transferred from the programmable controller is displayed on the display screen by a ladder diagram in a form the same as that originally developed, and the pseudo-programs contained in the user program are also displayed between the lines of the program statements as easily understandable comments upon referring to the comment file. Accordingly, comments inserted in the user program for the sake of convenience at development of the user program are effectively preserved and restored after debugging, understanding of the contents of the user program and the management thereof are facilitated, and the efficiency of such operations as debugging is greatly improved.

A second embodiment of the invention will now be described.

Fig. 7 illustrates the hardware of a programmable controller and a programming apparatus connected thereto.

The programmable controller comprises an MPU 31, a system program memory 33, a working memory 35, a user program memory 32, an input/output memory 34, an input/output circuit 36, and an interface circuit 39 for interfacing the programming apparatus, which is indicated at numeral 40. The working memory 35 contains an I/O number conversion table 35A defined by the user. When the user program of the programmable controller is created, the programming apparatus 40 is connected to the programmable controller via the interface circuit 39. A so-called personal computer (a small-size computer) programmed for the purpose of programming a user program can be used as the programming apparatus besides a computer having a special-purpose architecture and program.

Fig. 8 illustrates the corresponding relationship between the I/O number conversion table 35A, which is provided in the working memory 35, and the input/output memory 34. Numerals representing addresses and the like used in this drawing and in the following description are expressed using decimal notation to facilitate an understanding thereof.

Absolute addresses are assigned to the I/O areas of the input/output memory 34 in order starting from 0000. There is a 16-bit storage location per each single address of the absolute addresses. The states (on or off) of relay contacts or the like are stored in the input/output areas of the input/output memory, as mentioned above. The absolute addresses represent the channel numbers in the input/output memory 34. Each channel is composed of 16 bits. A specific bit in each channel is designated by one of the bit addresses $D_0$ through $D_{15}$. One contact is represented by one bit. Accordingly, in a case where a channel is designated in a user program, it will suffice to use only the absolute address. When a specific contact is to be designated, however, it is necessary to use the particular absolute address and the bit address.

The I/O number conversion table 35A shown in Fig. 8 is set by a user using the programming apparatus 40 before a user program is created. The I/O number conversion table 35A inputted to the programming apparatus 40 is subsequently transferred to and stored in working memory 35 of the programmable controller via the interface circuit 39. It is permissible to leave the table 35A in the memory of the programming apparatus 40 rather than transferring it to the programmable controller. However, it is convenient to store the table 35A in the programmable controller since it will then be unnecessary to use a specific programming apparatus (which incorporates the table 35A). In case of a programmable controller having an input function, setting of the conversion table 35A and creation of a user program are possible without relying upon a programming apparatus.

The I/O number conversion table 35A includes an I/O area identification capable of being set at will by the user, as well as a leading absolute address and trailing absolute address of the input/output area of the input/output memory 34 to be designated by the input/output area identification. A plurality of the input/output area identifications are capable of being set. The setting of the conversion table 35A is carried out by entering the I/O area identifications and the leading and trailing absolute addresses from the input unit (a keyboard, for example) of the programming apparatus 40 (or programmable controller).

In the example shown in Fig. 8, an I/O area of 100 channels (1600 bits) from absolute address 0000 to absolute address 0099 of input/output memory 34 is assigned as a UA area. Similarly, an I/O area of 300 channels (4800 bits) from absolute address 0100 to absolute address 0299 is assigned as a UB area, and an I/O area of 60 channels (960 bits) from absolute address 1000 to absolute address 1060 is assigned as a UN area.

Figs. 9a and 9b are ladder diagrams illustrating examples of user programs.

Fig. 9a represents a user program entered using an I/O area identification defined by the user. The user program of Fig. 9a is displayed on the display unit of the programming apparatus 40 and is easy for the user (the individual creating the program) to understand. Fig. 9b illustrates what is obtained by converting the user program shown in Fig. 9a using the I/O number conversion table 35A. In Fig. 9b, the I/O numbers of Fig. 9a have been converted into absolute addresses of the input/output memory 34.

The user program is created by entering symbols of input contacts and output terminals and relay symbols such as parentheses (in Fig. 9a, the parentheses enclosing MOV), and entering the I/O numbers corresponding to these. An I/O number which includes the area identification "UA0010" is assigned to the input contact at the upper left of Fig. 9a. In this I/O number, "UA" represents the aforementioned area identification, the two higher order digits "00" represent the relative address of the UA area, and the two lower order digits "10" represent the bit address. The area identification "UA" represents the absolute addresses 0000 - 0099 of the input area and has the relative addresses of 00 - 99. Since the relative address "UA00" corresponds to the absolute address "0000", "UA00I0" is converted into absolute address "000010" of the I/O area of input/output memory 34.

Likewise, in "UB00000" attached to the output terminal symbol, the area identification UB represents the absolute addresses 0100 - 0299 of the I/O area. The UB area possesses the relative addresses UB000 - UB199. Specifically, the relative addresses UB000 - UB199 correspond to the absolute addresses 0100 - 0299. The "UB000" in "UB00000" represents a relative address, which corresponds to the absolute address "0100". The two lower order digits "00" represent a bit address. Accordingly, "UB00000" is converted into "010000".

Similarly, in "UB10013", "UB100" is the relative address of the UB area, and this corresponds to the absolute address "0200" of the I/O area of the input/output memory 34. The two lower order bits "13" represent a bit address. Accordingly, "UB10013" is converted into the absolute address "020013" which includes also the bit address.

"MOV UN00 UA10" represents an instruction which causes the data (16 bits) at address UN00 in the I/O area of input/output memory 34 to be transferred to address UA10. Only a channel number is attached to the transfer instruction MOV. The relative address "UN00" corresponds to the absolute address "1000", and "UA10" corresponds to "0010". Accordingly, the above-mentioned transfer instruction is converted into "MOV 1000 0010". This is an instruction which causes the channel data (16 bits) at absolute address "1000" in the I/O area of input/output memory 34 to be transferred to the channel at absolute address "0010".

Thus, an I/O number represented by the area identification and relative address defined by the user is converted into an absolute address using the conversion table 35A. The user program shown in Fig. 9b in which the I/O numbers have been converted into absolute addresses is stored in the user program memory 32 (generally, upon being further converted into machine language).

Fig. 10 is a flowchart illustrating an algorithm for creating a user program in the programming apparatus 40 using a ladder diagram.

A procedure for creating a user program will now be described based on the flowchart of Fig. 10.

First, the user sets the conversion contents of an I/O number in the conversion table 35A, as in Fig. 8, after which the user inputs a relay diagram symbol to the display of the programming apparatus 40 (step 121). Next, the I/O number relating to this symbol is inputted by a number previously defined by the user (step 122). The inputted relay diagram symbol and the I/O number are displayed on the display screen, after which the I/O number conversion table 35A is searched (step 123) to determine whether an I/O number comprising an absolute address corresponding to the inputted I/O number exists (step 124). If this I/O number does not exist (NO at step 124), an input-error message is displayed on the display screen (step 125), after which the program proceeds to step 122. Here the system waits for entry of an I/O number again.

If an I/O number of an absolute address corresponding to the inputted I/O number exists (YES at step 124), the inputted I/O number is converted into the I/O number of the absolute address (step 126). The I/O number of the absolute address is saved in memory along with the previously entered relay diagram symbol (step 127). The foregoing processing is repeated until inputs end, thereby completing the user program. When I/O numbers defined by the user are entered at the time of user program creation in this processing, these are displayed as a ladder diagram (Fig. 9a) and the entered I/O numbers are converted into absolute addresses so that the programmable controller will be capable of operating.

The user program thus created is taken from the programming apparatus 40 and stored in the user program memory 32 within the programmable controller via the interface circuit 39.

Thus, in a case where a user program has been created using a programming apparatus such as a personal computer, the user program is transferred to a programmable controller, thereby making it possible to operate the same even if it is an ordinary programmable controller.

However, a programmable controller installed at a factory or the like is not limited to one of the type for which the aforementioned programming apparatus is carried in and used for programming. Accordingly, the programmable controller of this embodiment has the I/O number conversion table provided within the working memory 35. Thus, even if the programmable controller is one possessing a user program programmed by a programming apparatus not having the I/O number converting function of the kind shown in Fig. 10, as long as the programmable controller is equipped with the I/O number conversion table, it is possible for the I/O numbers of absolute addresses in this user program to be converted into user-defined I/O numbers using the aforementioned I/O number conversion table. By displaying this on the display unit, operations such as modification of the user program can be performed with ease.

According to the embodiment described above, redefinition of an I/O number can be carried out using the leading and trailing addresses of the input/output memory for every designated area. As a result, the burden upon the memory can be reduced in comparison with a case where redefinition is performed using character strings such as labels as in the prior art.

In a case where a user program is long or the object under control can be divided into a plurality of sections, it is possible to assign the individuals the I/O areas of the relays used and the I/O area identifications, thereby facilitating the management of the I/O areas and enhancing the efficiency of such operations as user program creation and debugging.

A third embodiment of the invention will now be described.

Fig. 11 illustrates the construction of a programmable controller having a function by which the controller is capable of programming a user program.

The programmable controller includes a microprocessor 51 which executes processing, described below, for creating a user program, as well as sequence control in accordance with the user program, a user program memory 52 for storing the above-described user program using original instruction numbers defined by the maker (i.e., maker-defined instruction numbers), a system program memory 53, an input/output memory 54, a working memory 55 having an instruction number conversion table, described below, a keyboard 57 capable of entering a user program using user-defined instruction numbers, a display unit 58 for displaying the created user program using the user-defined instruction numbers, and an interface circuit 59 for connecting the programmable controller to a programming apparatus 60 or the like.

Fig. 12 shows an example of an instruction number conversion table 55A stored in the working memory 55. The table 55A stores, in correlated form, original instruction numbers defined by a maker and corresponding user-defined instruction numbers defined by the user. The conversion table 55A is created by entering the user-defined instruction numbers corresponding to the original instruction numbers using the keyboard 57. It is possible to adopt an arrangement in which the original instruction numbers are stored in advance or entered by the user along with the user-defined instruction numbers. There are user-defined instruction numbers (indicated by "-" in Fig. 12) that are not defined for original instruction numbers, and there are user-defined instruction numbers (e.g., No. 98 in Fig. 12) defined by the user to be the same as the original instruction number.

Fig. 13 is a flowchart illustrating a processing procedure for creating a user program in accordance with this embodiment.

First, the user enters a prescribed instruction from the keyboard 57 using a user-defined instruction number (step 131). In this case, required numerals (e.g., the address of the destination of a transfer, the address of the origin of a transfer, etc). are also entered.

When the user-defined instruction number is entered, reference is had to the conversion table 55A to determine whether the entered user-defined instruction number exists in the conversion table (steps 132, 133). If the entered user-defined instruction number is present in the conversion table 55A, the corresponding original instruction number is read out of the table 55A, the program statement containing this original instruction number is stored in the user program memory 52, and the program statement containing the entered user-defined instruction number is displayed on the display unit 58 in the form of a ladder diagram (step 134)

If the entered instruction number is not present in the conversion table 55A as a user-defined instruction number, then it is decided that the entered instruction number is an original instruction number and not a user-defined instruction number, the program statement containing this entered original instruction number is stored in the user program memory 52 and displayed on the display unit 58 (step 135). In this case, a message to the effect that the input is an original instruction number can be displayed, or it is permissible to demand an input for confirming that the input is an original instruction number.

The user program is created by repeating the foregoing processing. It is permissible to adopt an arrangement in which, whenever an instruction number is entered, the program statement including the instruction number is preserved in the working memory 55 and is not stored in the user program memory 52. Then, when the user program is completed, the program is written in the user program memory en masse.

Fig. 14 is a flowchart illustrating a processing procedure for reading the user program out of the user program memory and displaying it on the display unit.

One program statement is read out of the user program memory 52 (step 141), and it is determined whether the user-defined instruction number corresponding to the original instruction number contained in this program statement is present in the conversion table 55A (steps 142, 143). If it is present in the conversion table, the program statement containing this user-defined instruction number is displayed on the display unit 58 in the form of a ladder diagram (step 144). If it is not present in the conversion table, then the read program statement containing the original instruction number is displayed on the display unit 58 in the form of a ladder diagram (step 145).

By repeating the foregoing processing, the user program stored in the user program memory 52 is displayed on the display unit 58 statement by statement.

It is permissible to adopt an arrangement in which the user program creating processing shown in Fig. 13 and the user program display processing shown in Fig. 14 is performed by the programming apparatus 60. In such case, the user program created by the programming apparatus 60 is transferred to the programmable controller via the interface circuit 59, and the program is stored in the user program memory 52. Further, the user program read out of the user program memory 52 is transferred to the programming apparatus 60 via the interface circuit 59. The programmable controller does not require the keyboard 57 and display unit 58. The instruction number conversion table is created by the programming apparatus 60 and, if necessary, the table is transferred to the programmable controller and stored in the working memory 55. Storing the instruction number conversion table in the programmable controller makes it possible for the display processing shown in Fig. 14 or user program revision processing to be performed by a programming apparatus which did not take part in user program creation or by another computer system by referring to this conversion table.

As many apparently widely different embodiments of the present invention can be made without departing from the spirit and scope thereof, it is to be understood that the invention is not limited to the specific embodiments thereof except as defined in the appended claims.

## Claims

1. A program development aiding apparatus for a programmable controller, comprising:
comment/pseudo-program conversion means for extracting a comment that has been written between lines of a created program, assigning the extracted comment to an input contact, and creating a pseudo-program statement corresponding to the input contact; and
comment file means for correlating and storing a number of the input contact, to which the comment has been assigned in the comment/pseudo-program conversion, and the comment.

2. The apparatus according to claim 1, wherein said comment/pseudo-program conversion means creates a pseudo-program statement upon setting an output terminal with respect to said input terminal, said output terminal being representative of the pseudo-program.

3. The apparatus according to claim 1, further comprising means for transferring a created program, which includes a pseudo-program statement, to a programmable controller.

4. The apparatus according to claim 1, further comprising means for converting a pseudo-program statement in a program, which includes said pseudo-program statement, back into a corresponding comment by referring to said comment file means.

5. The apparatus according to claim 4, further comprising means for displaying a program wherein the comment, back to which the pseudo-program statement has been converted, is included between lines.

6. The apparatus according to claim 2, further comprising means for extracting a pseudo-program statement based on a number of the output terminal representative of the pseudo-program in the program which includes said pseudo-program statement, and converting the extracted pseudo-program statement back into a corresponding comment by referring to said comment file means.

7. A programming method for a programmable controller, comprising the steps of:

extracting a comment that has been written between lines of a created program;

assigning the extracted comment to an input contact;

creating a pseudo-program statement corresponding to the input contact; and

correlating and storing, in a comment file, a number of the input contact, to which the comment has been assigned in the creation of the pseudo-program, and the comment.

8. The method according to claim 7; wherein a pseudo-program is created upon setting an output terminal with respect to said input terminal, said output terminal being representative of the pseudo-program.

9. The method according to claim 7, further comprising a step of transferring a created program, which includes a pseudo-program statement, to a programmable controller.

10. The method according to claim 7, further comprising a step of converting a pseudo-program statement in a program, which includes said pseudo-program statement, back into a corresponding comment by referring to said comment file.

11. The method according to claim 10, further comprising a step of displaying a program wherein the comment, back to which the pseudo-program statement has been converted, is included between lines.

12. The method according to claim 8, further comprising steps of extracting a pseudo-program statement based on a number of the output terminal representative of the pseudo-program in the program which includes said pseudo-program statement, and converting the extracted pseudo-program statement back into a corresponding statement by referring to said comment file.

13. A programming method for creating a user program of a programmable controller equipped with an input/output memory having an input/output area, which possesses absolute addresses, for storing input/output data of a control element such as a relay contact at a storage location designated by the absolute address, the method comprising the steps of:

partitioning the input/output area of said input/output memory into a plurality of areas;

creating a conversion table for correlating and storing an identification of each partitioned area and absolute addresses data specifying the partitioned area;

designating a control element of the input/output area by entering the identification of the partitioned area and a relative address in this partitioned area; and

converting the designated control element into the absolute address thereof by referring to said conversion table.

14. A programming apparatus for creating a user program of a programmable controller equipped with an input/output memory having an input/output area, which possesses absolute addresses, for storing input/output data of a control element such as a relay contact at a storage location designated by the absolute address, the apparatus comprising:

means for creating a conversion table for correlating and storing identifications of partitioned areas, which are obtained when the input/output area of said input/output memory is partitioned into a plurality of areas, and absolute address data specifying these partitioned areas; and

means which, when a control element of an input/output area is designated by entering the identification of the partitioned area and a relative address in this partitioned area, is for converting the designated control element into the absolute address thereof by referring to said conversion table.

15. The apparatus according to claim 14, further comprising means for transferring the created conversion table to a programmable controller.

16. A programmable controller comprising:

an input/output memory having an input/output area, which possesses absolute addresses, for storing input/output data of a control element such as a relay contact at a storage location designated by the absolute address; and

a conversion table for correlating and storing identifications of partitioned areas, which are obtained when the input/output area of said input/output memory is partitioned into a plurality of areas, and absolute address data specifying these partitioned areas.

17. A programmable controller comprising:

an input/output memory having an input/output area, which possesses absolute addresses, for storing input/output data of a control element such as a relay contact at a storage location designated by the absolute address;

means for creating a conversion table for correlating and storing identifications of partitioned areas, which are obtained when the input/output area of said input/output memory is partitioned into a plurality of areas, and absolute address data specifying these partitioned areas; and

means which, when a control element of an input/output area is designated by entering the identification of the partitioned area and a relative address in this partitioned area, is for converting the designated control element into the absolute address thereof by referring to said conversion table.

18. The programmable controller according to claim 17, further comprising means for storing the created conversion table.

19. A programmable controller comprising:

a user program memory for storing a user program described using maker-defined instruction numbers;

an instruction number conversion table for mutually correlating and storing the maker-defined instruction numbers and corresponding user-defined instruction numbers; and

means which, when a user-defined instruction number is entered, is for converting this entered user-defined instruction number into a maker-defined instruction number upon referring to said instruction number conversion table.

20. The programmable controller according to claim 19, further comprising means for performing control in such a manner that a user program created by the instruction number conversion executed by said converting means is stored in said user program memory.

21. The programmable controller according to claim 19, further comprising means for entering a user program statement using user-defined instruction number.

22. The programmable controller according to claim 19, further comprising input means for entering user-defined instruction numbers corresponding to maker-defined instruction numbers in order to create said instruction number conversion table.

23. The programmable controller according to claim 19, further comprising:

means for reading a user program out of the user program memory and converting a maker-defined instruction number, contained in the read user program, into a user-defined instruction number upon referring to said instruction number conversion table; and

means for displaying the user program containing the converted user-defined instruction number.

24. A programmable controller comprising:

a user program memory for storing a user program described using maker-defined instruction numbers; and

an instruction number conversion table for mutually correlating and storing the maker-defined instruction numbers and corresponding user-defined instruction numbers.

25. The programmable controller according to claim 24, further comprising input means for entering user-defined instruction numbers corresponding to maker-defined instruction numbers in order to create said instruction number conversion table.

26. The programmable controller according to claim 24, further comprising:

means for reading a user program out of the user program memory and converting a maker-defined instruction number, contained in the read user program, into a user-defined instruction number upon referring to said instruction number conversion table; and

means for displaying the user program containing the converted user-defined instruction number.

27. A programming method comprising the steps of:

creating, in advance, an instruction number conversion table for mutually correlating and storing maker-defined instruction numbers and corresponding user-defined instruction numbers;

entering a user program statement using a user-defined instruction number; and

converting an entered user-defined instruction number into a maker-defined instruction number upon referring to said instruction number conversion table.

28. The method according to claim 27, further comprising a step of transferring a user program created by the instruction number conversion to a programmable controller or storing this user program in a user program memory.

29. The method according to claim 27, further comprising a step of converting a maker-defined instruction number in a user program containing this maker-defined instruction number, transferred from a programmable controller or read out of a user program memory, into a user-defined instruction number upon referring to said instruction conversion table; and

displaying the user program containing the converted user-defined instruction number.

30. A programming apparatus comprising:

a conversion table for mutually correlating and storing maker-defined instruction numbers and corresponding user-defined instruction numbers;

means for entering a user program statement using a user-defined instruction number; and

means for converting an entered user-defined instruction number into a maker-defined instruction number upon referring to said instruction number conversion table.

31. The apparatus according to claim 30, further comprising means for performing control in such a manner that a user program created by the instruction number conversion is transferred to a programmable controller or stored in a user program memory.

32. The apparatus according to claim 30, further comprising:

means for converting a maker-defined instruction number in a user program containing the maker-defined instruction number, transferred from a programmable controller or read out of a user program memory, into a user-defined instruction number upon referring to said instruction conversion table; and

means for displaying the user program containing the converted user-defined instruction number.

33. The apparatus according to claim 30, further comprising input means for entering user-defined instruction numbers corresponding to maker-defined instruction numbers in order to create said instruction number conversion table.

# Fig.1

PROGRAMMABLE CONTROLLER 10

MICRO-PROCESSOR 11

USER PROGRAM MEMORY 12

SYSTEM PROGRAM MEMORY 13

INPUT/ OUTPUT MEMORY 14

INTERFACE 19

MEMORY 22

INPUT UNIT 23

DISPLAY UNIT 24

INTERFACE 29

CPU 21

DEVELOPMENT AIDING APPARATUS 20

Fig. 2

Fig. 3

Fig. 4

# Fig.5

```
        ┌─────────────┐
        │    START     │
        └──────┬──────┘
               │
               ▼
101 ─── ┌─────────────────┐
        │  READ PROGRAM   │
        │  LINE BY LINE   │
        └────────┬────────┘
                 │
                 ▼
102 ───      ◇ COMMENT ? ◇ ──── N ───┐
                 │                    │
                 Y                    │
                 ▼                    │
103 ─── ┌─────────────────┐          │
        │  ASSIGN INPUT   │          │
        │    CONTACT      │          │
        └────────┬────────┘          │
                 │                    │
                 ▼                    │
104 ─── ┌─────────────────┐          │
        │ CONVERT COMMENT │          │
        │      INTO       │          │
        │ PSEUDO-PROGRAM  │          │
        └────────┬────────┘          │
                 │◄───────────────────┘
                 ▼
105 ─── ┌─────────────────┐
        │  CONVERT INTO   │
        │ MACHINE LANGUAGE│
        └────────┬────────┘
                 │
                 ▼
106 ───     ◇ END OF     ◇ ──── Y ───┐
            ◇ ALL LINES? ◇           │
                 │                    │
                 N                    ▼
                 │            107 ─── ┌─────────────────┐
                 │                    │    TRANSFER      │
                 │                    │ CONVERTED MACHINE│
                 │                    │  PROGRAM TO      │
                 │                    │  PROGRAMMABLE    │
                 │                    │  CONTROLLER      │
                 │                    └────────┬────────┘
                 │                             │
                 │                             ▼
                 │                    ┌─────────────┐
                 │                    │     END      │
                 │                    └─────────────┘
```

# Fig.6

```
                    ┌─────────────┐
                    │    START    │
                    └─────────────┘
                           │
        ┌──────────────────┤
        │                  ▼
        │         ┌──────────────────┐
        │    111  │    READ OUT      │
        │  ───────│  PROGRAM LINE    │
        │         │     BY LINE      │
        │         └──────────────────┘
        │                  │
        │                  ▼
        │             ╱─────────╲
        │       112  ╱    IS     ╲
        │     ──────╱   OUTPUT    ╲        N
        │          ╱TERMINAL NUMBER╲ ──────────────┐
        │          ╲   SPECIFIC    ╱               │
        │           ╲    ONE?     ╱                │
        │            ╲───────────╱                 │
        │                  │Y                      │
        │                  ▼                       ▼
        │         ┌──────────────────┐    ┌──────────────────┐
        │    113  │    CONVERT       │    │  CONVERT INTO    │
        │  ───────│  PSEUDO-PROGRAM  │    │  INTERMEDIATE    │
        │         │BACK INTO COMMENT │    │   LANGUAGE       │
        │         │  BY REFERRING    │    └──────────────────┘
        │         │ TO COMMENT FILE  │             │  114
        │         └──────────────────┘             │
        │                  │◄──────────────────────┘
        │                  ▼
        │    115  ┌──────────────────┐
        │  ───────│     DISPLAY      │
        │         └──────────────────┘
        │                  │
        │      116         ▼
        │  N          ╱─────────╲
        └────────────╱  END OF   ╲
                     ╲ ALL LINES? ╱
                      ╲─────────╱
                           │Y
                           ▼
                    ┌─────────────┐
                    │     END     │
                    └─────────────┘
```

18

# Fig.7

EP 0 416 509 A2

# Fig.8

35A

| I/O AREA IDENTIFICATION | LEADING ADDRESS OF I/O AREA | TRAILING ADDRESS OF I/O AREA |
|---|---|---|
| U A | 0000 | 0099 |
| U B | 0100 | 0299 |
| | | |
| U N | 1000 | 1060 |
| ⋮ | ⋮ | ⋮ |
| ⋮ | ⋮ | ⋮ |
| | | |

ABSOLUTE ADDRESS $D_{15}$ ------ $D_0$

0000

0099
0100

0299
0300

1000

34

EP 0 416 509 A2

Fig.10

```
                    ┌─────────────┐
                    │    START    │
                    └──────┬──────┘
                           │
        ┌──────────────────┤
        │        ┌─────────▼─────────┐
    121 │        │   ENTER RELAY     │
        │        │  DIAGRAM SYMBOL   │
        │        └─────────┬─────────┘
        │                  │
        │       ⒜─────────►│
        │                  │
        │        ┌─────────▼─────────┐
    122 │        │   ENTER I/O NO.   │
        │        └─────────┬─────────┘
        │                  │
        │        ┌─────────▼─────────┐
    123 │        │  SEARCH I/O NO.   │
        │        │ CONVERSION TABLE  │
        │        └─────────┬─────────┘
        │                  │
        │      124        ◆
        │              ╱  IS THERE  ╲      N        ┌──────────────────┐
        │             ◄ CORRESPONDING ►──────────┐  │     DISPLAY      │  125
        │              ╲  ABSOLUTE  ╱            │  │  ERROR MESSAGE   │
        │               ╲ ADDRESS ╱             └──►│ ON DISPLAY SCREEN│
        │                 ╲  ? ╱                    └────────┬─────────┘
        │                  │Y                                │
        │        ┌─────────▼─────────┐                       ▼
    126 │        │  CONVERT INTO     │                      ⒜
        │        │ ABSOLUTE ADDRESS  │
        │        └─────────┬─────────┘
        │                  │
        │        ┌─────────▼─────────┐
        │        │      SAVE         │
    127 │        │  RELAY DIAGRAM    │
        │        │  SYMBOL AND       │
        │        │ ABSOLUTE ADDRESS  │
        │        └─────────┬─────────┘
        │                  │
        │  128            ◆
        │      N       ╱ END OF ╲
        └────────────◄  INPUTS?  ►
                       ╲       ╱
                        │Y
                  ┌─────▼─────┐
                  │    END    │
                  └───────────┘
```

# Fig.11

# Fig.12

55A

| ORIGINAL INSTRUCTION NO. | USER-DEFINED INSTRUCTION NO. |
|---|---|
| O O | 3 1 |
| O 1 | 4 5 |
| O 2 | — |
| ⋮ | ⋮ |
| 9 8 | 9 8 |
| 9 9 | O 1 |

EP 0 416 509 A2

# Fig.13

ENTER INSTRUCTION — 131

SEARCH
CONVERSION TABLE — 132

133
DOES
NUMBER EXIST
IN CONVERSION
TABLE?

Y

N

135

DISPLAY ENTERED
INSTRUCTION NO.,
AND WRITE ORIGINAL
INSTRUCTION NO.
IN USER
PROGRAM MEMORY

134

DISPLAY
USER-DEFINED
INSTRUCTION NO.,
AND WRITE ORIGINAL
INSTRUCTION NO.
IN USER
PROGRAM MEMORY

# Fig.14

```
        READ OUT
      USER PROGRAM        ─ 141


         SEARCH
     CONVERSION TABLE      ─ 142


              143
          DOES
       NUMBER EXIST                    Y
       IN CONVERSION  ─────────────────────┐
          TABLE?
          N
              │                            │
     145      │                    144     │
   DISPLAY               DISPLAY
  INSTRUCTION NO.       USER-DEFINED
    READ OUT           INSTRUCTION NO.
```

EP 0 416 509 A2

Fig.15   PRIOR ART

```
┌─────────────────────────────────┐
│                                 │
│   ┌┤├─────────────┌MOV (21)  ┐│  │
│                    │    OOO   ││  │
│                    └    OO1   ┘│  │
│                                 │
│                                 │
└─────────────────────────────────┘
```

Fig.16   PRIOR ART

FUN → 2 → 1 → WRITE

→ O → O → O → WRITE

→ O → O → 1 → WRITE

27